Europäisches Patentamt

European Patent Office

Office européen des brevets

(19)

(11)   EP 1 291 683 A1

(12)   EUROPEAN PATENT APPLICATION
published in accordance with Art. 158(3) EPC

(43) Date of publication:
  12.03.2003  Bulletin 2003/11

(51) Int Cl.⁷: $G02B\ 6/12$

(21) Application number: 01938629.1

(86) International application number:
  PCT/JP01/05007

(22) Date of filing: 13.06.2001

(87) International publication number:
  WO 01/096918 (20.12.2001 Gazette 2001/51)

(84) Designated Contracting States:
  AT BE CH CY DE DK ES FI FR GB GR IE IT LI LU
  MC NL PT SE

(30) Priority: 14.06.2000  JP 2000178459

(71) Applicant: The Furukawa Electric Co., Ltd.
  Tokyo 100-8322 (JP)

(72) Inventors:
  • OOYAMA, Isao,
    C/O THE FURUKAWA ELECTRIC CO., LTD.
    Chiyoda-ku, Tokyo 100-8322 (JP)
  • NARA, Kazutaka,
    C/O THE FURUKAWA ELECTRIC CO., LTD
    Chiyoda-ku, Tokyo 100-8322 (JP)
  • KASHIHARA, Kazuhisa,
    THE FURUKAWA ELECTRIC CO.,LTD
    Chiyoda-ku, Tokyo 100-8322 (JP)

(74) Representative: Dealtry, Brian
  Eric Potter Clarkson,
  Park View House,
  58 The Ropewalk
  Nottingham NG1 5DD (GB)

(54)   ARRAY WAVEGUIDE DIFFRACTION GRATING

(57)   An arrayed waveguide grating having a preferable aligning work property with an optical fiber on a connecting partner side and able to restrain the temperature dependence of a center wavelength of transmitting light is provided. An input end (35) of the optical input waveguide (2) of the arrayed waveguide grating is terminated on a first end face (18), and an output end (36) of the optical output waveguides (6) is terminated on a second end face (19). The first slab waveguide (3) is separated into separating slab waveguides (3a, 3b) on a separating face (8) crossing a path of propagating light. The separating face (8), the first end face (18) and the second end face (19) are set to be opposed to each other. A high thermal expansion coefficient member (7) is arranged on a lower side of the separating slab waveguide (3a). A low thermal expansion plate member (40) is arranged on a lower side of the separating slab waveguide (3b). A side of the separating slab waveguide (3a) is slid and moved along the separating face (8) by thermal expansion and contraction of the high thermal expansion coefficient member (7).

Fig. 1A

EP 1 291 683 A1

**Description**

Technical Field

The present invention relates to an arrayed waveguide grating used as an optical wavelength multiplexer and/or an optical wavelength demultiplexer, in optical wavelength division multiplexing communications.

Background of the Invention

In recent years, optical wavelength division multiplexing communications are vigorously researched and developed and are practically used forward as a method for greatly increasing the transmitting capacity of optical communication. For example, a plurality of lights having wavelengths different from each other are multiplexed and transmitted in the optical wavelength division multiplexing communication. In a system of such optical wavelength division multiplexing communications, it is indispensable that a light transmitting device, etc. for transmitting only light of a predetermined wavelength are arranged within the systems to take out light every wavelength on a light receiving side from the transmitted and multiplexed light.

There is an arrayed waveguide grating (AWG) of a planar light wave circuit (PLC) as shown in Fig. 5 as one example of the light transmitting device. In the arrayed waveguide grating, a waveguide as shown in Fig. 5 is formed on a substrate 1 of silicon, etc. by a core of silica-based glass, etc.

The waveguide of the arrayed waveguide grating is constructed by containing one or more optical input waveguides 2 arranged side by side; a first slab waveguide 3 connected to an output end of this optical input waveguides 2; an arrayed waveguide 4 connected to an output end of the first slab waveguide 3 and constructed by a plurality of channel waveguides 4a arranged side by side; a second slab waveguide 5 connected to an output end of the arrayed waveguide 4; and a plurality of optical output waveguides 6 arranged side by side and connected to an output end of the second slab waveguide 5.

The above channel waveguides 4a propagate light transmitted from the first slab waveguide 3, and are formed at lengths different from each other by a set amount. The lengths of the adjacent channel waveguides 4a are different from each other by ΔL. The optical output waveguides 6 are arranged in accordance with the number of signal lights of wavelengths different from each other and demultiplexed or multiplexed by e. g., the arrayed waveguide grating. A plurality of channel waveguides 4a such as 100 channel waveguides 4a are normally arranged. In Fig. 5, for brevity of this figure, the number of optical output waveguides 6, the number of channel waveguides 4a and the number of optical input waveguides 2 are shown simply and schematically.

For example, an unillustrated optical fiber on a transmitting side is connected to one of the optical input waveguides 2 so as to introduce wavelength multiplexing light. Light introduced to the first slab waveguide 3 through one of the optical input waveguides 2 is widened by its diffracting effects, and is incident to each channel waveguide 4a of the arrayed waveguide 4, and is propagated in the arrayed waveguide 4.

The light propagated in this arrayed waveguide 4 reaches the second slab waveguide 5, and is further converged and outputted to the optical output waveguides 6. At this time, since the lengths of all the channel waveguides 4a are different from each other by the set amount, a shift is caused in the phase of individual light after this light is propagated in the arrayed waveguide 4. A wave front (phase front) of the converged light is inclined in accordance with an amount of this shift, and a converging position is determined by an angle of this inclination.

Therefore, the converging positions of lights of different wavelengths are different from each other. Accordingly, lights of different wavelengths (demultiplexed lights) can be outputted from the different optical output waveguides 6 every wavelength by forming the optical output waveguides 6 in the converging positions of the respective wavelengths.

Namely, the arrayed waveguide grating has an optical demultiplexing function in which lights of two wavelengths or more are demultiplexed from multiplexing lights having a plurality of wavelengths different from each other and inputted from the optical input waveguide 2, and are outputted from the respective optical output waveguides 6. A center wavelength of the demultiplexed light is proportional to a difference ($\Delta L$) in length of the channel waveguides 4a and an effective refractive index $n_c$ of the arrayed waveguide 4.

Since the arrayed waveguide grating has the above characteristics, the arrayed waveguide grating can be used as a multiplexed wavelength demultiplexer for wavelength division multiplexing transmission systems. For example, as shown in Fig. 5, when multiplexed wavelength light of wavelengths $\lambda 1$, $\lambda 2$, $\lambda 3$, ---, $\lambda n$ (n is an integer equal to or greater than 2) are inputted from one of the optical input waveguides 2, this light with the respective wavelengths is widened in the first slab waveguide 3 and reach the arrayed waveguide 4. These lights of the respective wavelengths then pass through the second slab waveguide 5, and are converged in different positions in accordance with the respective wavelengths as mentioned above. The demultiplexed lights of the different wavelengths are incident to the optical output waveguides 6 different from each other. These lights are then outputted from the output ends of the optical output waveguides 6 through the respective optical output waveguides 6.

The above light of each wavelength is taken out through an unillustrated optical fiber for an optical output by connecting this optical fiber to the output end of each optical output waveguide 6. When the optical fiber is connected to each optical output waveguide 6 and the above optical input waveguide 2, for example, an optical fiber array fixedly arranging the optical fiber in a one-dimensional array shape is respectively prepared. This optical fiber array is fixed to connecting end face sides of the optical output waveguides 6 and the optical input waveguides 2 so that the optical fiber array and the optical output waveguides 6 are connected to each other, and the optical fiber and one of the optical input waveguides 2 are similarly connected to each other.

In optical transmitting characteristics (wavelength characteristics of optical transmitting intensity of the arrayed waveguide grating) of lights outputted from each optical output waveguide 6 in the above arrayed waveguide grating, each center wavelength of transmitting light (for example, $\lambda 1$, $\lambda 2$, $\lambda 3$, ---, $\lambda n$) is set to a center, and optical transmittance is reduced as the wavelength is shifted from each corresponding center wavelength of transmitting light.

Further, since the arrayed waveguide grating utilizes the principle of reciprocity (reversibility) of light, the arrayed waveguide grating has the function of an optical multiplexer together with the function of an optical demultiplexer. Namely, when lights of a plurality of wavelengths different from each other are incident from the respective optical output waveguides 6 every each of the wavelengths in a direction opposed to an advancing direction of an optical signal shown in Fig. 5, these lights are multiplexed by the arrayed waveguide 4 through a reverse propagating path, and wavelength multiplexing light is emitted from one of the optical input waveguides 2.

In such an arrayed waveguide grating, as mentioned above, wavelength resolution of the grating is proportional to the difference ($\Delta L$) in length of the channel waveguides 4a constituting the grating. Therefore, by largely designing the $\Delta L$, it is possible to multiplex and demultiplex lights having a narrow wavelength interval unable to be realized in the conventional grating . Thus, it is possible to fulfill an optical multiplexing/demultiplexing function of a plurality of signal lights required to realize optical wavelength multiplexing communications of high density, i.e., a function for demultiplexing or multiplexing a plurality of optical signals having a wavelength interval equal to or smaller than 1 nm.

Since the above arrayed waveguide grating is originally constructed mainly by a silica-based glass material. The above center wavelength of transmitting light in the arrayed waveguide grating is shifted dependently on temperature by temperature dependence of this silica-based glass material. This temperature dependence is shown by the following formula (1) when the transmitting center wavelength of light outputted from one optical output waveguide 6 is set to $\lambda$, the equivalent refractive index of a core forming the above arrayed waveguide 4 is set to $n_C$, a coefficient of thermal expansion of the substrate (e.g., a silicon substrate) 1 is set to $\alpha_S$, and a temperature changing amount of the arrayed waveguide grating is set to T.

$$d\lambda/dT=(\lambda/n_c) \cdot (dn_c/dT) + \lambda \cdot \alpha_S \qquad (1)$$

Here, the temperature dependence of the above center wavelength of transmitting light is calculated from the formula (1) in the conventional general arrayed waveguide grating. In the conventional general arrayed waveguide grating, since $dn_c/dT=1 \times 10^{-5}$ $(^\circ C^{-1})$, $\alpha_S=3.0 \times 10^{-6} (^\circ C^{-1})$ and $n_c=1.451$ (a value at a wavelength 1.55 $\mu m$) are set, these values are substituted into the formula (1).

The wavelength $\lambda$ is different in each optical output waveguide 6, but the temperature dependence of each wavelength $\lambda$ is equal. The arrayed waveguide grating used at present is often used to demultiplex and multiplex the wavelength multiplexing light in a wavelength band with a wavelength 1550 nm as a center. Accordingly, $\lambda=1550$ nm is here substituted into the formula (1). Thus, the temperature dependence of the above center wavelength of transmitting light of the conventional general arrayed waveguide grating is expressed by a value shown in the formula (2).

$$d\lambda/dT=0.015 \qquad (2)$$

The unit of $d\lambda/dT$ is nm/$^\circ$C. For example, when a using environmental temperature of the arrayed waveguide grating is changed by 20 $^\circ$C, the center wavelength of transmitting light outputted from each optical output waveguide 6 is shifted by 0.30 nm. When the above using environmental temperature is changed by 70 $^\circ$C or more, the shifting amount of the above center wavelength of transmitting light is equal to or greater than 1 nm.

The arrayed waveguide grating is characterized in that wavelengths can be demultiplexed or multiplexed at a very narrow space equal to or smaller than 1 nm. The arrayed waveguide grating is applied for wavelength multiplexing optical communications by using this feature. Therefore, as mentioned above, it is a fatal defect that the center wavelength of transmitting light is changed by the above shifting amount by the using environmental temperature change.

Therefore, as shown in Fig. 5, an arrayed waveguide grating having a temperature adjusting means such as a peltier device 30, etc. for constantly holding the temperature of the arrayed waveguide grating on the basis of the detecting temperature of a thermistor 31 is conventionally proposed so as not to change the center wavelength of transmitting light in accordance with temperature. However, the peltier device, etc. must be turned on by e.g., 1 W at any time to constantly hold the temperature of the arrayed waveguide grating by using the above temperature adjusting means so that it takes cost. Further, there is a case in which no center wavelength of transmitting light shift can be exactly restrained by an assembly shift of parts forming the peltier device and its control mechanism, etc.

Therefore, to solve the above problems, an arrayed waveguide grating able to restrain the center wavelength of transmitting light shift of the arrayed waveguide grating without arranging the peltier device, etc. is proposed in Japanese Patent Application Nos. 270201/1999 (filing date: Sept. 24, 1999) and 021533/2000 (filing date: Jan. 31, 2000).

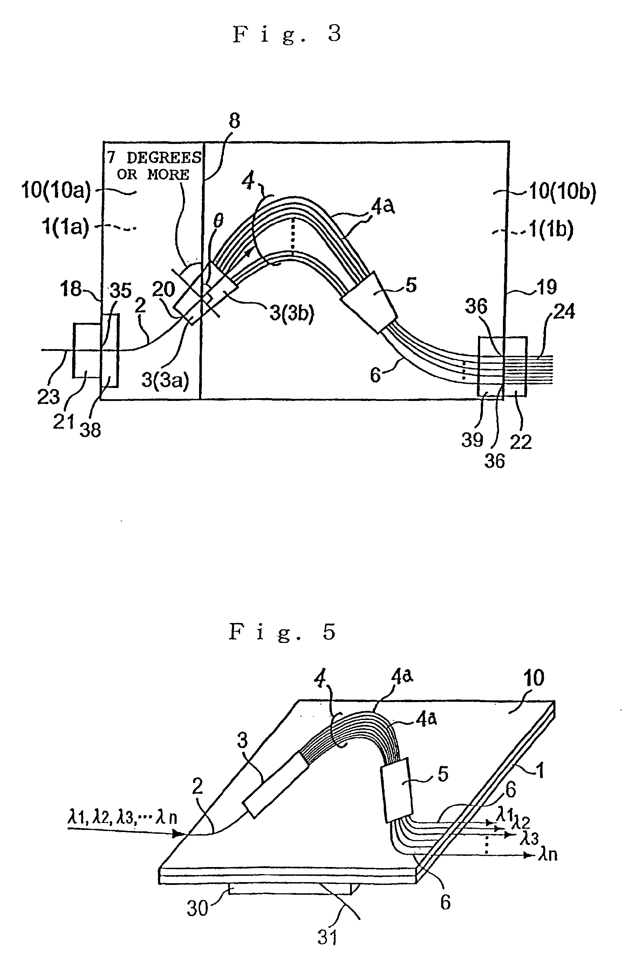

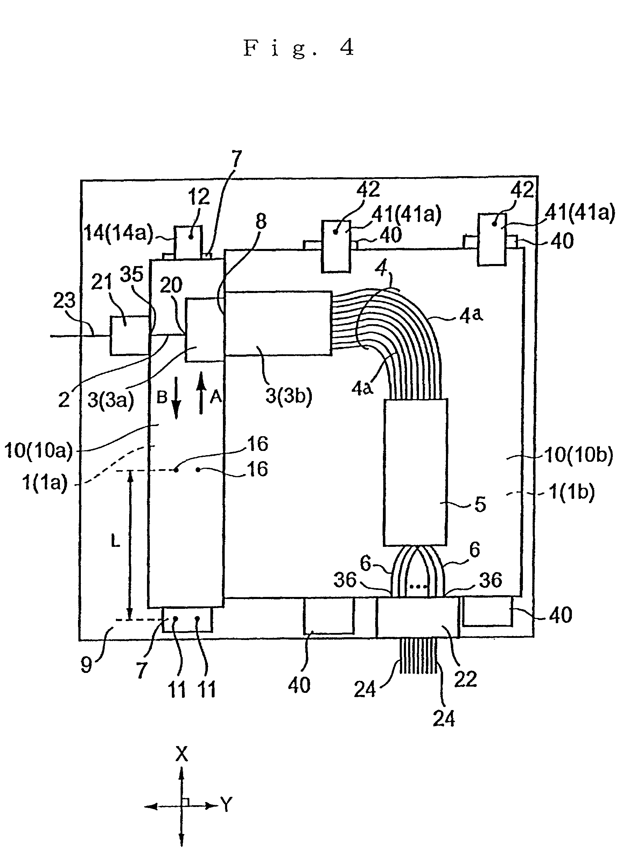

Fig. 4 shows one example of the arrayed waveguide grating formed on the basis of the above proposal. In the arrayed waveguide grating shown in Fig. 4, a glass layer 10 formed by silica-based glass is fixedly formed on the surface of a substrate 1.

Similar to the conventional example, one or more optical input waveguides 2, a first slab waveguide 3, an arrayed waveguide 4 constructed by a plurality of channel waveguides 4a, a second slab waveguide 5 and a plurality of optical output waveguides 6 are formed in the glass layer 10. The above channel waveguides 4a and the optical output waveguides 6 are respectively arranged side by side at predetermined waveguide spaces. However, in the arrayed waveguide grating shown in Fig. 4, the first slab waveguide 3 is separated on a separating face 8 crossing (crossing approximately perpendicularly in this figure) an optical path of the first slab waveguide 3.

The above glass layer 10 is separated into a glass layer 10a and a glass layer 10b, and the substrate 1 is separated into substrates 1a, 1b by the separating face 8.

In the arrayed waveguide grating shown in Fig. 4, as mentioned above, the first slab waveguide 3 is separated into separating slab waveguides 3a, 3b on the separating face 8. The above center wavelength of transmitting light is shifted by sliding and moving a side of this separated separating slab waveguide 3a along the above separating face 8. A slide moving mechanism for making the above slide movement is arranged in the arrayed waveguide grating shown in Fig. 4.

This slide moving mechanism is a mechanism for sliding and moving the side of the separating slab waveguide 3a along the separating face 8 in the reducing direction of a temperature dependence variation of each center wavelength of transmitting light of the arrayed waveguide grating. In the construction shown in Fig. 4, the above slide moving mechanism is formed by arranging a high thermal expansion coefficient member 7 on a lower portion side of the glass layer 10a having the separating slab waveguide 3a.

A base 9 formed by a material of a low coefficient of thermal expansion such as silica glass, Invar lot, etc. is arranged on a lower portion side of the high thermal expansion coefficient member 7. One end side of the high thermal expansion coefficient member 7 is fixed to the base 9 by a fixing portion 11. The high thermal expansion coefficient member 7 is fixed to the substrate 1a by a fixing portion 16. An engaging member 14 is arranged on the other end side of the high thermal expansion coefficient member 7, and restrains the glass layer 10a from being moved in a thickness direction of the substrate 1a. The distance between the above fixing portion 16 and the above fixing portion 11 is set to L.

The glass layer 10a and the substrate 1a below this glass layer 10a are slidably moved with respect to the above base 9. As the high thermal expansion coefficient member 7 is thermally expanded and contracted, the glass layer 10a and the substrate 1a are integrally slid and moved in the X-direction of Fig. 4 by ([the coefficient of thermal expansion of the high thermal expansion coefficient member 7] $\times$ [a temperature changing amount] $\times$ [L]).

The substrate 1b on forming sides of the separating slab waveguide 3b, the arrayed waveguide 4, the second slab waveguide 4 and the optical output waveguides 6 are fixed to the base 9 through a low thermal expansion plate member 40 formed by a material of a low coefficient of thermal expansion. Thus, level positions of the glass layers 10a and 10b in their thickness directions are aligned with each other by arranging the low thermal expansion plate member 40 on a lower portion side of the substrate 1b.

The low thermal expansion plate member 40 has a coefficient of thermal expansion equivalent to that of the base 9, and expansion and contraction of this low thermal expansion plate member 40 due to heat are very small. Therefore, an entire rear face side of the low thermal expansion plate member 40 is fixed to the base 9 by an adhesive, YAG welding, etc., and an entire surface side of the low thermal expansion plate member 40 is fixed to the substrate 1b by an adhesive, etc. An engaging member 41 is arranged on one end side of the low thermal expansion plate member 40.

The above engaging member 41 is an L-shaped member having an upper plate portion 41a arranged along an upper face of the glass layer 10b, and an unillustrated side plate portion arranged along a side face of the glass layer 10b. The side plate portion is fixed to the base 9 by a fixing portion 42. Similarly, the above engaging member 14 is an L-shaped member having an upper plate portion 14a arranged along an upper face of the glass layer 10a, and an unillustrated side plate portion arranged along a side face of the glass layer 10a. This side plate portion is fixed to the base 9 by a fixing portion 12.

In Fig. 4, an optical fiber arranging tool 21 fixing an optical fiber 23 thereto is fixed to the side of an input end 35 of the optical input waveguides 2 of the arrayed waveguide grating. Further, an optical fiber arranging tool (optical fiber array) 22 fixedly arranging a plurality of optical fibers 24 is fixed to the side of an output end 36 of the optical output waveguides 6. One of the optical input waveguides 2 and the optical fiber 23 are aligned with each other, and each optical output waveguide 6 and the corresponding optical fiber 24 are similarly aligned with each other.

When the using environmental temperature of the arrayed waveguide grating shown in Fig. 4 is changed, the high thermal expansion coefficient member 7 is greatly expanded or contracted in comparison with the glass layer 10 and the substrate 1. Accordingly, the glass layer 10a and the substrate 1a are integrally slid and moved along the separating face 8 in the direction of an arrow A or B in Fig. 4 so that the separating slab waveguide 3a and the optical input waveguides 2 are slid and moved. In Fig. 4, the glass layer 10a and the substrate 1a are moved in the direction of the arrow A when temperature is raised, and are moved in the direction of the arrow B when temperature is lowered.

The separating slab waveguide 3a is moved along the above separating face 8 in the reducing direction of the temperature dependence variation of each center wavelength of transmitting light of the arrayed waveguide grating, and its moving amount is set to a moving amount introduced by aiming at linear dispersion characteristics of the arrayed waveguide grating. Therefore, in the arrayed waveguide grating of this proposal, it is possible to restrain the temperature dependence variation of each center wavelength of transmitting light caused by the using environmental temperature change of the arrayed waveguide grating.

However, in the arrayed waveguide grating of the above proposal, for example, there is a case in which the optical fiber arranging tool 22 comes in contact with the low thermal expansion plate member 40 and the optical fiber 24 of the optical fiber arranging tool 22 interferes with the low thermal expansion plate member 40 at a fixing time of the optical fiber arranging tool 22. Therefore, it sometimes happens that a variation of light outputted from the arrayed waveguide grating is caused, and an aligning work property of the above optical output waveguides 6 and the optical fiber 24 grows worse.

The present invention is made to solve the above problem, and an object of the present invention is to provide an arrayed waveguide grating able to precisely restrain the temperature dependence of a center wavelength of transmitting light, and having a preferable aligning work property with connected optical parts such as an optical fiber, etc.

Disclosure of the Invention

To achieve the above object, the present invention provides an arrayed waveguide grating of the following construction. Namely, the present invention resides in an arrayed waveguide grating comprising one or more optical input waveguides arranged side by side; a first slab waveguide connected to an output side of the optical input waveguides; an arrayed waveguide connected to an output side of the first slab waveguide and consisted of a plurality of channel waveguides arranged side by side and having lengths different from each other by a set amount; a second slab waveguide connected to an output side of the arrayed waveguide; and a plurality of optical output waveguides connected to an output side of the second slab waveguide and arranged side by side. In this arrayed waveguide grating, an input end of the optical input waveguides is terminated on a first end face of the arrayed waveguide grating, and an output end of the optical output waveguides is terminated on a second end face opposed to the first end face of the arrayed waveguide grating, and at least one of the first and second slab waveguides is separated on a separating face crossing an optical path passing through the slab waveguides and forms a separating slab waveguide, and the arrayed waveguide grating further comprises a center wavelength shift mechanism for shifting each center wavelength of transmitting light of the arrayed waveguide grating by sliding and moving at least one side of the separating slab waveguide along the separating face in accordance with the temperature of AWG.

In one mode of the present invention, a longitudinal direction of the first end face, a longitudinal direction of the second end face and a longitudinal direction of the separating face are set to be approximately parallel to each other.

In one constructional example of the present invention, the separating face is set to a face perpendicularly crossing a central axis of the slab waveguide in its light advancing direction. In another constructional example of the present invention, the separating face is set to a face slantingly crossing a central axis of the slab waveguide in its light advancing direction, and a smaller angle among angles formed between the separating face and the central axis of the slab waveguide in its light advancing direction is set to be equal to or smaller than 83°.

In one suitable example, the center wavelength shift mechanism is constructed by sliding and moving the separating slab waveguide in the reducing direction of a temperature dependence variation of each center wavelength of transmitting light of the arrayed waveguide grating.

Further, the center wavelength shift mechanism can be constructed by containing a substance thermally expanded and contracted in accordance with a temperature changing amount of the arrayed waveguide grating by an amount according to a shift amount of the center wavelength of transmitting light shifted in accordance with the temperature changing amount.

In one mode example of the present invention, the arrayed waveguide grating is formed on a substrate face, and the substrate forming this arrayed waveguide grating is separated into a first substrate having a separating face conformed to the separating face of the separating slab waveguide and forming one side of the arrayed waveguide grating with the separating face of the separating slab waveguide as a boundary, and a second substrate forming the other side of the arrayed waveguide grating similarly with the separating face as a boundary, and a high thermal expansion coefficient member having a coefficient of thermal expansion greater than that of the substrate is arranged along a moving side substrate face in a moving side substrate on one side of these first and second substrates by setting a longitudinal direction of the high thermal expansion coefficient member to a slide direction of the separating face of the separating slab waveguide, and a center wavelength shift mechanism containing the high thermal expansion coefficient member as a constructional element is formed by fixing a base end side of this high thermal expansion coefficient member to a fixing portion and fixing a thermal expansion-contraction moving side of the high thermal expansion coefficient member to the moving side substrate, and the center wavelength shift mechanism slides and moves one side of the separating slab waveguide along the separating face with respect to the other side of the separating slab waveguide by a thermal expansion-contraction movement of the high thermal expansion coefficient member.

In one preferable example, the first and second substrates are mounted onto a base face, and the high thermal expansion coefficient member is arranged between the base face and a lower face of the moving side substrate on one side of the first or second substrate, and a base end side of the high thermal expansion coefficient member is fixed to the base as a fixing portion, and the substrate on the other side among the first or second substrate is fixed to the base through a low thermal expansion coefficient member arranged on a lower face side of this substrate on the other side, and a coefficient of thermal expansion of the low thermal expansion coefficient member is set to be approximately equal to that of the base.

In the present invention, the first end face of the arrayed waveguide grating terminating the input end of the optical input waveguides, and the second end face of the arrayed waveguide grating terminating the output end of the optical output waveguides are opposed to each other. Therefore, for example, when the high thermal expansion coefficient member and the low thermal expansion plate member are arranged in the same direction as the longitudinal direction of the separating face as in the proposed arrayed waveguide grating shown in Fig. 4, the positions of end portions of the high thermal expansion coefficient member and the low thermal expansion plate member become arranging positions different from positions of the input end of the above optical input waveguides and the output end of the optical output waveguides. Therefore, an optical fiber on an input side connected to the input end of the optical input waveguides and an optical fiber on an output side connected to the output end of the optical output waveguides do not hit against the high thermal expansion coefficient member and the low thermal expansion plate member. Accordingly, a work for aligning and connecting each of the above optical fibers is made very easily.

For example, when an optical fiber arranging tool is fixed in the aligning connection of the optical fiber on the output side to the output side of the optical output waveguides as in the proposed arrayed waveguide grating shown in Fig. 4, no optical fiber arranging tool comes in contact with the high thermal expansion coefficient member and the low thermal expansion plate member. Therefore, no phenomenon of interference of the optical fiber of the optical fiber arranging tool due to this contact is caused. Accordingly, due to this interference, no variation of outputted light from the arrayed waveguide grating is also caused. Therefore, an arrayed waveguide grating having a preferable aligning work property of the optical output waveguides and optical parts such as an output side optical fiber, etc. can be provided.

In the present invention, the center wavelength of transmitting light of the arrayed waveguide grating is shifted by sliding and moving at least one side of the above separating slide waveguide by the center wavelength shift mechanism along the above separating face in accordance with the temperature. Temperature dependence of the above center wavelength of transmitting light can be precisely restrained by suitably setting an amount of this shift. Further, in a separate using mode, for example, it is also possible to cope with a request in which each center wavelength of transmitting light is consciously shifted by a set amount and is outputted, etc.

Brief Description of the Drawings

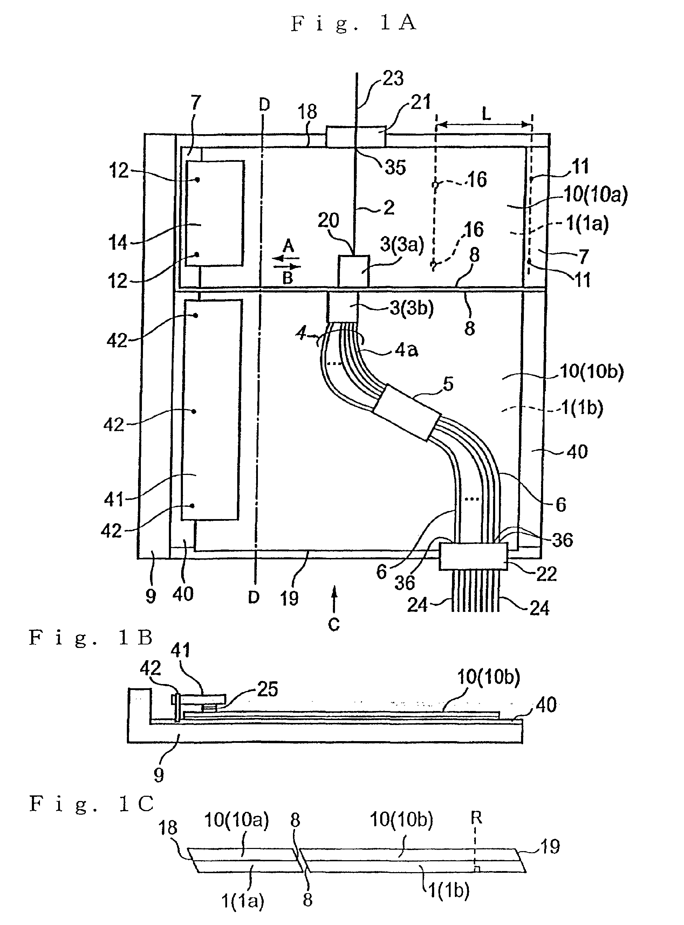

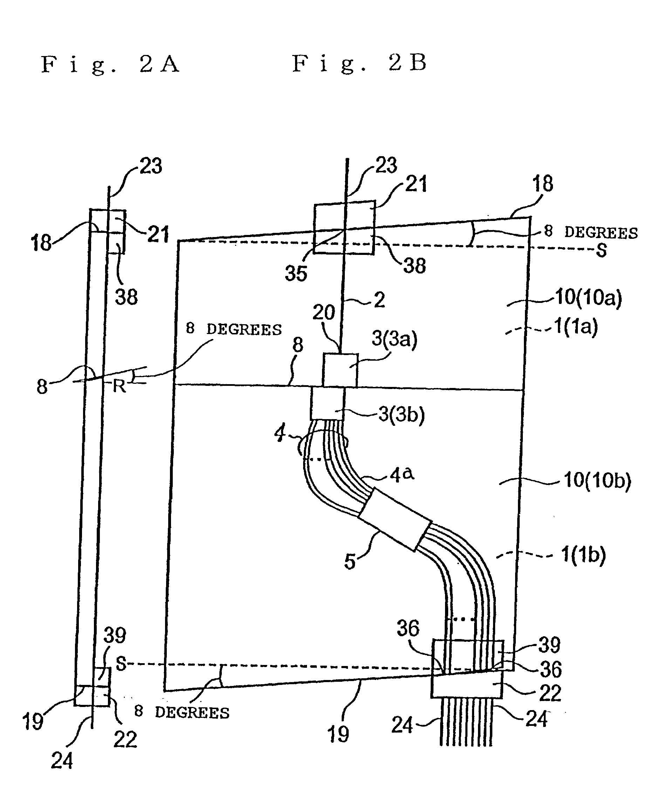

Fig. 1A is a constructional explanatory view showing one embodiment of an arrayed waveguide grating in the present invention. Fig. 1B is a view obtained by seeing Fig. 1A from a C-direction. Fig. 1C is a view showing a D-D section of Fig. 1A. Figs. 2A and 2B are respectively side and plan views showing a chip construction of another embodiment of the arrayed waveguide grating in the present invention together with an optical fiber on a connecting partner side, etc. Fig. 3 is a plan constructional view showing a chip construction of still another embodiment of the arrayed waveguide grating in the present invention together with an optical fiber on a connecting partner side, etc. Fig. 4 is a plan explanatory view showing the construction of an arrayed waveguide grating proposed in the previous Japanese Patent Application. Fig. 5 is an explanatory view showing an example of a conventional arrayed waveguide grating formed by arranging a peltier device.

Best Mode for Carrying Out the Invention

The present invention will be explained in accordance with the accompanying drawings to describe the present invention in more detail. In the explanation of each embodiment in the present invention shown below, the same term portions as portions explained in Figs. 4 and 5 are designated by the same reference numerals, and their overlapping explanations are omitted or simplified. Figs. 1A and 1B show one embodiment of the arrayed waveguide grating in the present invention. Fig. 1A shows a plan view of this arrayed waveguide grating, and Fig. 1B shows a side view in which Fig. 1A is seen from a C-direction.

This embodiment is approximately similar to the arrayed waveguide grating proposed and shown in Fig. 4. This embodiment differs from the above proposed example in that an input end 35 of one or more optical input waveguides 2 is terminated on a first end face 18 of the arrayed waveguide grating, and an output end 36 of an optical output waveguides 6 is terminated on a second end face 19 opposed to the above first end face 18 of the arrayed waveguide grating.

Further, in this embodiment, as shown in Fig. 1A, a separating face 8 is formed as a face opposed to the above first end face 18 and the second end face 19, and a longitudinal direction of the first end face 18, a longitudinal direction of the second end face 19 and a longitudinal direction of the separating face 8 are set to be approximately parallel to each other.

In this embodiment, a center wavelength shift mechanism for shifting the above center wavelength of transmitting light by sliding and moving a side of the separating slab waveguide 3a along the separating face 8 is formed in the same constructional mode as the slide moving mechanism in the proposed example shown in Fig. 4. The center wavelength shift mechanism has a construction for sliding and moving the separating slab waveguide in the reducing direction of a temperature dependence variation of each center wavelength of transmitting light of the arrayed waveguide grating.

The center wavelength shift mechanism is constructed by containing the high thermal expansion coefficient member 7 as a substance thermally expanded and contracted in accordance with the above temperature changing amount by an amount according to a shifting amount of the center wavelength of transmitting light shifted in accordance with a temperature changing amount of the arrayed waveguide grating. For example, the high thermal expansion coefficient member 7 is formed by Al (aluminum) having $2.313 \times 10^{-5}$ (1/K) in coefficient of thermal expansion. The distance L between a fixing portion 11 for fixing the high thermal expansion coefficient member 7 to the base 9 and a fixing portion 16 for fixing the high thermal expansion coefficient member 7 to the substrate 1a is set to about 16.6 mm.

In this embodiment, as shown in Fig. 1B, an engaging member 41 is formed in a flat plate shape, and is fixed to a low thermal expansion plate member 40 by a fixing portion 42 of a pin shape. Similarly, an engaging portion 14 is formed in a flat plate shape, and is fixed to the high thermal expansion coefficient member 7 by a fixing portion 12 of a pin shape. Further, pressing members 25 are respectively interposed between the engaging members 41, 14 and the surfaces of glass layers 10b, 10a of the arrayed waveguide grating.

In this embodiment, a waveguide of the arrayed waveguide grating is formed by containing the following parameters.

Namely, a focal length $L_f{}'$ of the first slab waveguide 3 and a focal length $L_f$ of the second slab waveguide 5 are equal to each other, and are set to 9 mm. Further, an equivalent refractive index of the first slab waveguide 3 and an equivalent refractive index of the second slab waveguide 5 are set to $n_s$ at a temperature of 25 °C, and are 1.453 with respect to light having 1.55 μm in wavelength. Further, an optical path length difference ΔL of the adjacent channel waveguides 4a is set to 65.2 μm, and the distance between adjacent arrayed waveguides 4 is set to 15 μm, and a diffraction order m is set to 61. An equivalent refractive index $n_c$ of the arrayed waveguide 4 is set to 1.451 with respect to light having 1.55 μm in wavelength, and a group refractive index $n_g$ of the arrayed waveguide is set to 1.475 with respect to light having 1.55 μm in wavelength.

Accordingly, in the arrayed waveguide grating of this embodiment, a center wavelength of transmitting light $\lambda_0$ at a diffraction angle $\phi=0$ becomes $\lambda_0$=1550.9 nm. Further, similar to the above proposed example of Fig. 4, the relation of a using environmental temperature changing amount T of the arrayed waveguide grating and a position correcting amount dx' of the optical input waveguides 2 is expressed by the following formula (3). Accordingly, when the position correcting amount dx' in this embodiment is calculated from the above parameters, the relation shown by the formula (4) is derived.

$$dx'=\{(L_f{}' \cdot \Delta L)/(n_s \cdot d \cdot \lambda_0)\} \cdot n_g \cdot (d\lambda/dT) \cdot T \qquad (3)$$

$$dx'=0.3829T \qquad (4)$$

Namely, in this embodiment, when the temperature of the arrayed waveguide grating is changed by 10 °C, a center wavelength shift due to temperature can be corrected by the calculation if the position of an output end of the optical input waveguides 2 is corrected (moved) by about 3.83 μm in the X-direction.

Therefore, in this embodiment, the moving amount of a side of the separating slab waveguide 3a is determined such that the position of the output end 20 of the optical input waveguides 2 is moved by about 3.83 μm in the direction of an arrow A when the temperature of the arrayed waveguide grating is raised by 10 °C, and the position of the output end 20 of the optical input waveguides 2 is reversely moved by about 3.83 µm in the direction of an arrow B when the temperature of the arrayed waveguide grating is lowered by 10 °C.

The high thermal expansion coefficient member 7 is formed by aluminum (Al) so as to obtain this moving amount, and the distance L between the fixing portions 11 and 16 of the high thermal expansion coefficient member 7 is set to the above value.

In the arrayed waveguide grating of this embodiment, similar to the proposed example of Fig. 4, a glass layer of silica-based glass is formed on a silicon substrate 1 by using flame hydrolysis deposition, photolithography and dry etching. A silicon wafer is applied as the silicon substrate 1, and plural glass layers 10 for the arrayed waveguide grating are formed on this silicon wafer. Thereafter, the silicon substrate is cut by a dicing saw, and is formed as a chip so that an arrayed waveguide grating chip is formed.

Further, in this embodiment, a half wavelength plate is fixedly inserted in a crossing mode of all channel waveguides 4a of the arrayed waveguide 4 although this half wavelength plate is not shown in Fig. 1. After the above chip is formed, a slit for inserting the half wavelength plate is formed in the crossing mode of all the channel waveguides 4a. The half wavelength plate is then inserted into this slit and is fixed by a thermosetting adhesive. The half wavelength plate is arranged to restrain polarization dependent loss of the arrayed waveguide grating.

In this state, the first slab waveguide 3 is separated into separating slab waveguides 3a, 3b by cutting on the separating face 8 crossing an optical path of the first slab waveguide 3. The glass layer 10 is correspondingly separated into glass layers 10a, 10b. At this time, the substrate 1 is also separated into a first substrate 1a and a second substrate 1b. In this embodiment, a marker for a separating line is collectively formed in advance in a portion except for the waveguide construction (a waveguide pattern) of the arrayed waveguide grating at a forming time of the above waveguide pattern so as to easily and exactly form the above separating face 8.

The separating face 8 is coated with an oil for reflection prevention to prevent reflection on the separating face 8. The above arrayed waveguide grating chip is arranged on the base 9 through the high thermal expansion coefficient member 7 and the low thermal expansion plate member 40. The glass layer 10b and the substrate 1b are fixed in the above fixing mode, and the glass layer 10a and the substrate 1a are arranged in the above mode so as to be moved in accordance with an expanding-contracting amount caused by a change in temperature of the high thermal expansion coefficient member 7.

This embodiment is constructed as mentioned above, and effects similar to those in Fig. 4 can be obtained in this embodiment by an operation similar to that of the arrayed waveguide grating in the proposed example shown in Fig. 4. A center wavelength of transmitting light shift amount of the arrayed waveguide grating within a using temperature range is actually measured, and it has been confirmed that this center wavelength of transmitting light shift amount can be restrained to about 0.01 nm.

Further, in accordance with this embodiment, the first end face 18 terminated at the input end 35 of the optical input waveguides 2, the second end face 19 terminated at the output end 36 of the optical output waveguides 6, and the separating face 8 are opposed to each other. In the case of the arrayed waveguide grating of Fig. 4, there is a possibility of generation of the problem that the optical fibers 24 connected to the optical output waveguides 6 and its optical fiber arranging tool 22 hit against the low thermal expansion plate member 40. However, in this embodiment, as mentioned above, the first end face 18, the second end face 19 and the separating face 8 are opposed to each other so that the generation of such a problem can be restrained. Therefore, it is very easy to make a work for connecting the optical fibers 24 on an output side and its optical fiber arranging tool 22 to the output end 36 of the optical output waveguides 6, and a work for aligning the optical fibers 24, the optical fiber arranging tool 22 and the output end 36.

Further, a work for connecting the optical fiber 23 on an input side and its optical fiber arranging tool 21 to the input end 35 one of the optical input waveguides 2 is also preferably made. Therefore, it is possible to construct an arrayed waveguide grating having a preferable aligning work property with the optical fiber on a connecting partner side.

Therefore, in accordance with this embodiment, the arrayed waveguide grating can be manufactured with good working property, and the arrayed waveguide grating able to precisely restrain the temperature dependence of each center wavelength of transmitting light can be obtained with good yield.

In this embodiment, when the chip of the arrayed waveguide grating is cut in a D-D section of Fig. 1A, its section is set to a form shown in Fig. 1C. Namely, each of the first end face 18, the second end face 19 and the separating face 8 is set to an inclination face crossing a face R perpendicular to a face of the substrate 1 at an angle equal to or greater than eight degrees. In accordance with such a construction, it is possible to restrain reflected light from being returned to a light input side in a connecting portion of the optical fiber 23 and one of the optical input waveguides 2, and also restrain the reflected light from being returned to the input side in a connecting portion of the optical fibers 24 and the corresponding optical output waveguides 6. Further, a optical return loss on the separating face 8 can be reduced.

The present invention is not limited to the above embodiments, but various embodiment modes can be adopted. For example, in the above embodiments, the longitudinal direction of the first end face 18 and the longitudinal direction of the second end face 19 are set to be parallel to the longitudinal direction of the separating face 8. However, as shown in Fig. 2B, the longitudinal directions of the first end face 18 and the second end face 19 may be also set to be inclined with respect to the longitudinal direction of the separating face 8.

In this case, as shown in Fig. 2B, when the first end face 18 and the second end face 19 are set to slanting faces crossing a face S parallel to the separating face 8 at an angle equal to or greater than eight degrees, it is possible to restrain the reflected light from being returned to the light input side in the connecting portion of the optical fiber 23 and one of the optical input waveguides 2. Further, it is possible to restrain the reflected light from being returned to the input side in the connecting portion of the optical fibers 24 and the corresponding optical output waveguides 6. Therefore, optical return loss in these connecting portions can be set to e.g., 35 dB or more so that connection loss can be reduced.

As shown in Fig. 2A, when the separating face 8 is set to a slanting face crossing a face R perpendicular to a face of the substrate 1 at an angle equal to or greater than eight degrees, optical return loss on the separating face 8 can be reduced and connection loss of the separating slab waveguide 3a and the separating slab waveguide 3b can be reduced. Reference numerals 38, 39 shown in Figs. 2A and 2B designate upper plate members arranged to further improve a working property of the end faces 18, 19 of the arrayed waveguide grating and the optical fiber arranging tools 21, 22.

Further, in the above embodiments, the separating face 8 is formed by a face approximately perpendicularly crossing a central axis of the first slab waveguide 3 in its light advancing direction. However, as shown in Fig. 3, the separating face 8 may be also set to a slanting face with respect to the above central axis in the light advancing direction. It is sufficient to set the separating face 8 to a separating face crossing an optical path passing through the separated slab waveguide. In this case, when a smaller angle φ among angles formed between the separating face 8 and the central axis of the above slab waveguide in its light advancing direction is set to be equal to or smaller than 83°, optical return loss on the separating face 8 is set to e.g., 35 dB or more, and the connection loss of the separating slab waveguide 3a and the separating slab waveguide 3b can be reduced.

Further, the first slab waveguide 3 is separated in the above embodiments, but the arrayed waveguide grating is formed by utilizing reciprocity of light. Accordingly, a side of the second slab waveguide 5 may be separated and at least one side of the separated separating slab waveguide may be also moved by a center wavelength shift mechanism along the above separating face 8 in a substrate face direction. In this case, effects similar to those in the above embodiments can be also obtained.

Further, in the above embodiments, the separating face 8 is formed by cutting, but may be also formed by cleavaging, etc.

Further, detailed values of the equivalent refractive index of each of the waveguides 2, 3, 4, 5, 6 constituting the arrayed waveguide grating of the present invention, the number of waveguides, sizes of the waveguides, etc. are not particularly limited to the embodiments, but may be suitably set.

Industrial Applicability

As mentioned above, the arrayed waveguide grating in the present invention precisely demultiplexes, multiplexes and multiplexes/demultiplexes an optical signal in optical communication, etc., and is suitable for an aligning connection of the arrayed waveguide grating and optical parts such as an optical fiber, etc. with good working property.

**Claims**

1. An arrayed waveguide grating, comprising :

   one or more optical input waveguides arranged side by side;
   a first slab waveguide connected to an output side of this optical input waveguides;
   an arrayed waveguide connected to an output side of the first slab waveguide and constructed by a plurality of channel waveguides arranged side by side and having lengths different from each other by a set amount;
   a second slab waveguide connected to an output side of the arrayed waveguide; and
   a plurality of optical output waveguides connected to an output side of the second slab waveguide and arranged side by side;
   the arrayed waveguide grating being **characterized in that** an input end of said optical input waveguides is terminated on a first end face of the arrayed waveguide grating, and an output end of said optical output waveguides is terminated on a second end face opposed to said first end face of the arrayed waveguide grating, and at least one of said first and second slab waveguide is separated on a separating face crossing an optical path passing through the slab waveguide and formed a separating slab waveguide, and the arrayed waveguide grating further comprises a center wavelength shift mechanism for shifting each center wavelength of transmitting light of the arrayed waveguide grating by sliding and moving at least one side of said separating slab waveguide along said separating face in accordance with a temperature.

2. An arrayed waveguide grating according to claim 1, wherein a longitudinal direction of the first end face, a longitudinal direction of the second end face and a longitudinal direction of the separating face are set to be approximately parallel to each other.

3. An arrayed waveguide grating according to claim 1, wherein the separating face is set to a face perpendicularly crossing a central axis of the slab waveguide in its light advancing direction.

4. An arrayed waveguide grating according to claim 1, wherein the separating face is set to a face slantingly crossing a central axis of the slab waveguide in its light advancing direction, and a smaller angle among angles formed between said separating face and the central axis of said slab waveguide in its light advancing direction is set to be equal to or smaller than 83°.

5. An arrayed waveguide grating according to claim 1, wherein the center wavelength shift mechanism is constructed by sliding and moving the separating slab waveguide in the reducing direction of a temperature dependence variation of each center wavelength of transmitting light of the arrayed waveguide grating.

6. An arrayed waveguide grating according to claim 5, wherein the center wavelength shift mechanism has a substance thermally expanded and contracted in accordance with a temperature changing amount by an amount according to a shift amount of the center wavelength of transmitting light shifted in accordance with said temperature changing amount of the arrayed waveguide grating .

7. An arrayed waveguide grating according to claim 1, wherein the arrayed waveguide grating is formed on a substrate face, and the substrate forming this arrayed waveguide grating is separated into a first substrate having a separating face conformed to the separating face of the separating slab waveguide and forming one side of the arrayed waveguide grating with the separating face of the separating slab waveguide as a boundary, and a second substrate forming the other side of the arrayed waveguide grating similarly with the separating face as a boundary, and a high thermal expansion coefficient member having a coefficient of thermal expansion greater than that of the substrate is arranged along a moving side substrate face in a moving side substrate on one side of these first or second substrate by setting a longitudinal direction of the high thermal expansion coefficient member to a slide direction of the separating face of said separating slab waveguide, and a center wavelength shift mechanism containing the high thermal expansion coefficient member as a constructional element is formed by fixing a base end side of this high thermal expansion coefficient member to a fixing portion and fixing a thermal expansion-contraction moving side of the high thermal expansion coefficient member to said moving side substrate, and the center wavelength shift mechanism slides and moves one side of the separating slab waveguide along said separating face with respect to the other side of the separating slab waveguide by a thermal expansion-contraction movement of the high thermal expansion coefficient member.

8. An arrayed waveguide grating according to claim 7, wherein the first and second substrates are mounted onto a base face, and the high thermal expansion coefficient member is arranged between the base face and a lower face of the moving side substrate on one side of the first or second substrate, and a base end side of the high thermal expansion coefficient member is fixed to the base as a fixing portion, and the substrate on the other side among the first and second substrates is fixed to said base through a low thermal expansion coefficient member arranged on a lower face side of this substrate on the other side, and a coefficient of thermal expansion of the low thermal expansion coefficient member is set to be approximately equal to that of the base.

Fig. 1A

Fig. 1B

Fig. 1C

Fig. 2A    Fig. 2B

# Fig. 3

# Fig. 5

Fig. 4

## INTERNATIONAL SEARCH REPORT

| | International application No. |
|---|---|
| | PCT/JP01/05007 |

A. CLASSIFICATION OF SUBJECT MATTER
Int.Cl⁷ G02B6/12

According to International Patent Classification (IPC) or to both national classification and IPC

B. FIELDS SEARCHED

Minimum documentation searched (classification system followed by classification symbols)
Int.Cl⁷ G02B 6/12-6/14, 6/293, 6/34

Documentation searched other than minimum documentation to the extent that such documents are included in the fields searched

| | | |
|---|---|---|
| Jitsuyo Shinan Koho | 1922-1996 | Toroku Jitsuyo Shinan Koho 1994-2001 |
| Kokai Jitsuyo Shinan Koho | 1971-2001 | Jitsuyo Shinan Toroku Koho 1996-2001 |

Electronic data base consulted during the international search (name of data base and, where practicable, search terms used)
JICST FILE(JOIS)

C. DOCUMENTS CONSIDERED TO BE RELEVANT

| Category* | Citation of document, with indication, where appropriate, of the relevant passages | Relevant to claim No. |
|---|---|---|
| Y | EP 919840 A1 (Nippon Telegraph and Telephone Corporation), 02 June, 1999 (02.06.99), Figs. 25-26, 31 & WO 98/36299 A1 & CA 2251754 A | 1-8 |
| Y | WO 98/13718 A1 (SIEMENS AKTIENGESELISCHAFT), 02 April, 1998 (02.04.98), & JP 2001-500989 A & EP 928435 A1 & CN 1238841 A | 1-8 |
| A | US 5905824 A (Vincent Delisle et al.), 18 May, 1999 (18.05.99), & EP 922973 A1 & JP 2000-241656 A | 1-8 |
| A | EP 911660 A1 (COMMISSARIANT ENERGIE ATOMIQUE), 28 April, 1999 (28.04.99), & JP 11-218639 A & FR 2770307 A | 1-8 |
| P,A<br>P,X | EP 1087246 A1 (The Furukawa Electric Co., Ltd.), 28 March, 2001 (28.03.01) (Family: none) | 1-6<br>7-8 |

☒ Further documents are listed in the continuation of Box C.  ☐ See patent family annex.

| | |
|---|---|
| *     Special categories of cited documents:<br>"A"   document defining the general state of the art which is not considered to be of particular relevance<br>"E"   earlier document but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |
| Date of the actual completion of the international search<br>    12 July, 2001 (12.07.01) | Date of mailing of the international search report<br>    24 July, 2001 (24.07.01) |
| Name and mailing address of the ISA/<br>    Japanese Patent Office | Authorized officer |
| Facsimile No. | Telephone No. |

Form PCT/ISA/210 (second sheet) (July 1992)

**EP 1 291 683 A1**

### INTERNATIONAL SEARCH REPORT

| International application No. |
| --- |
| PCT/JP01/05007 |

C (Continuation). DOCUMENTS CONSIDERED TO BE RELEVANT

| Category* | Citation of document, with indication, where appropriate, of the relevant passages | Relevant to claim No. |
| --- | --- | --- |
| E,A<br>E,X | JP 2001-188141 A (The Furukawa Electric Co., Ltd.),<br>Fig. 5<br>10 July, 2001 (10.07.01)  (Family: none) | 1-6<br>7-8 |
| P,A | JP 2001-141944 A (Hitachi Cable, Ltd.),<br>Fig. 1<br>25 May, 2001 (25.05.01)  (Family: none) | 1-8 |

Form PCT/ISA/210 (continuation of second sheet) (July 1992)

16